# FASCICULE DE BREVET EUROPEEN

(11) **EP 3 266 622 B1**
(45) Date de publication et mention de la délivrance du brevet: **06.03.2019**
(21) Numéro de dépôt: 17178662.7
(22) Date de dépôt: 29.06.2017
(51) Int. Cl.: B60B 15/28

(54) **DISPOSITIF DE LESTAGE DE ROUE D'ENGINS AGRICOLES ET PROCÉDÉS DE LESTAGE ASSOCIÉS**
BALLASTVORRICHTUNG FÜR RAD VON LANDWIRTSCHAFTLICHEN MASCHINEN, UND ENTSPRECHENDE BESCHWERUNGSVERFAHREN
WHEEL BALLAST DEVICE OF AGRICULTURAL VEHICLES AND ASSOCIATED BALLASTING METHODS

(30) Priorité: 01.07.2016 FR 1656307
(43) Date de publication de la demande: 10.01.2018
(73) Titulaire: EASYMASS, 02190 Guignicourt (FR)
(72) Inventeur: VERCAUTEREN, Hans, 02190 Berry au Bac (FR); KEM, Daniel, 02160 Moulins (FR)
(74) Mandataire: IPAZ

(56) Documents cités:
- EP-A1- 2 676 807
- CN-U- 201 587 282
- DE-A1-102014 202 074
- DE-B- 1 279 496
- US-A1- 2005 280 308

## Description

L'invention se rapporte au domaine des dispositifs pour lester les roues des engins agricoles, ainsi qu'aux procédés de lestage associés.

De manière générale, les tracteurs agricoles sont conçus pour être polyvalent et servent à entrainer une grande variété d'outils à des vitesses variables et sur des surfaces diverses telles que des routes, des chemins et des champs.

Pour pouvoir transmettre un effort de traction permettant d'utiliser la puissance disponible, ils doivent être suffisamment lourds lorsqu'ils travaillent à faible vitesse, ou encore par exemple sur un terrain accidenté.

Cependant, un poids important se traduit par un accroissement de la résistance au roulement, en particulier en sol meuble, ce qui entraîne une consommation de puissance inutile, par exemple lorsque le déplacement est en montée.

De plus, plus la charge supportée par les pneumatiques est importante, plus la pression de gonflage doit être élevée, ce qui se traduit par un effet de tassement plus appuyé qui se traduit par des difficultés de croissances des plantes et une consommation d'énergie supérieure lorsqu'il s'agit d'ameublir ces zones compactées.

Enfin le poids total roulant autorisé étant limité sur le plan de la réglementation, si le lestage reste présent sur le tracteur cela se traduit par une baisse de la charge utile transportable.

Afin de respecter les règles techniques de lestage et de gonflage, fonction notamment de la vitesse, la pratique consiste à ajouter du lest quand c'est nécessaire, pour que le tracteur puisse avancer avec un outil donné.

Cependant, les utilisateurs ont tendance à laisser le lestage sur le tracteur (avec les inconvénients décrit ci-dessus) quand il n'est pas aisé de procéder au retrait. Pour ces mêmes raisons, l'optimisation du lestage n'est pas forcément mise en oeuvre et il en résulte des pertes d'efficacité.

La solution la plus couramment utilisée consiste à ajouter une masse sur le relevage avant le tracteur, lorsqu'un seul outil est utilisé à l'arrière.

Toutefois, cette solution ne permet pas d'assurer un lestage suffisant et de maintenir un ratio de poids supporté par chaque essieu convenable.

Une solution de lestage-délestage rapide sur relevage arrière a été proposée dans le document EP 1976 744 B1. Bien que satisfaisante, elle est peu usitée dans la mesure où elle complique l'attelage d'un outil associé à l'arrière et constitue une solution couteuse si on considère le nombre de kilos ajoutés.

Une autre solution couramment utilisée et décrite dans le document DE102014202074 A1 consiste à ajouter des masses en fonte au niveau de la jante des roues arrière. Lorsque ces masses sont de type monobloc, elles sont alors difficiles à manipuler et ne permettent pas une modulation du lestage. Elles peuvent être constituées d'un assemblage de masses élémentaires, mais le montage et le démontage une par une est fastidieux. Il faut en effet à chaque fois aligner les perçages pour faciliter le centrage et recourir à plusieurs éléments de fixation.

L'invention a donc pour but d'éliminer tout ou partie des inconvénients mentionnés ci-avant au moyen d'un dispositif de lestage et de procédés de lestage associés, mettant en oeuvre une sécurisation simple, rapide et provisoire de masses élémentaires au moment de leur installation et avant la mise en oeuvre des moyens de fixation rapide.

Plus particulièrement, l'invention a pour objet un dispositif de lestage d'une roue d'engin agricole comprenant au moins une première masse de lestage, comportant une plaque évidée ayant préférentiellement la forme d'un disque , le disque étant doté de deux encoches pratiquées préférentiellement dans toute son épaisseur et diamétralement opposées, lesdites encoches débouchant préférentiellement en la circonférence du disque. Le dispositif de lestage comprend en outre un socle destiné à être monté sur une roue d'engin agricole et doté d'un cône de centrage apte à être emboîté dans l'évidement du disque de la première masse. Le disque de la première masse est doté de deux supports diamétralement opposés, faisant saillie dans l'évidement de la première masse et comprenant chacun au moins un premier logement s'étendant suivant une direction appartenant au plan du disque, tandis que le cône de centrage est constitué de deux arcs de cercle non jointifs et dotés en chacune de leurs extrémités d'une découpe pratiquée dans l'épaisseur, de sorte que, lorsque le cône et la masse sont emboîtés, les deux arcs de cercle sont en appui sur chacun des supports de la première masse, tandis que chacun des logements des supports est en regard d'une des découpes du cône, le logement et la découpe correspondante étant dès lors aptes à accueillir une broche permettant de solidariser l'emboîtement du socle et de la masse.

Des caractéristiques optionnelles de l'invention, complémentaires ou de substitution sont énoncées ci-après.

Selon certaines caractéristiques, le dispositif de lestage comporte des moyens de fixation rapide pour solidariser la première masse de lestage montée sur ledit socle avec ledit socle, lesdits moyens de fixation rapides comportant une clef apte à être bloquée dans un élément de retenue ménagé sur le socle de manière à maintenir la première masse de lestage contre ledit socle.

Selon d'autres caractéristiques, le disque de la première masse peut être prolongé par au moins une portion protubérante s'étendant depuis l'une des faces du disque suivant une direction sensiblement normale au plan du disque et en bordure de l'évidement , ladite portion étant alors constituée de deux arcs de cercle non jointifs et dotés en chacune de leurs extrémités, d'une découpe pratiquée dans l'épaisseur.

Selon d'autres caractéristiques, le dispositif de lestage peut comprendre une seconde masse de forme sensiblement identique à la première, la portion protubérante de la première masse étant alors apte à être emboîtée dans l'évidement de la seconde masse, selon une position dans laquelle la portion protubérante de la première masse est en appui sur chacun des supports de la seconde masse, tandis que chacune des découpes de la portion protubérante de la première masse est en regard d'un logement des supports de la seconde masse, la découpe et le logement correspondant étant dès lors aptes à accueillir une broche permettant de solidariser l'emboîtement des masses l'une dans l'autre.

Selon d'autres caractéristiques, l'évidement des masses peut être de forme sensiblement circulaire.

Selon d'autres caractéristiques, les découpes pratiquées dans l'épaisseur des extrémités de la portion protubérante des masse peuvent former chacune un arc de cercle s'étendant suivant une amplitude de 160° à 200°.

Selon d'autres caractéristiques, le logement de chaque support et sa découpe positionnée en regard, peuvent former à eux deux, lorsque la portion protubérante de la première masse est en appui sur chacun des supports de la seconde masse, une cavité cylindrique, préférentiellement lisse.

Selon d'autres caractéristiques, le logement de chaque support peut être constitué d'une cavité cylindrique, préférentiellement lisse, pratiquée dans ledit support.

Selon d'autres caractéristiques, les moyens de fixation rapide consistent en un élément de retenue et une clef dotée d'une tige pourvue à l'une de ses extrémités d'un crochet apte à être bloquer dans ledit élément de retenue, et pourvue à son autre extrémité d'une plaque pour maintenir les masses et d'un écrou (ou autre moyen de serrage), pour fixer la plaque de maintien.

Selon d'autres caractéristiques, les masses peuvent comporter alors au moins un cran pratiqué dans leur disque sur toute l'épaisseur.

Selon d'autres caractéristiques, le dispositif peut comprendre en outre un rack de stockage doté d'au moins un rail apte à accueillir une rangée de masses de lestages, le cran pratiqué dans le disque des masses étant alors compatible avec ledit rail.

Selon d'autres caractéristiques, le socle peut comporter des pattes aptes à être fixées sur la roue d'un engin agricole au moyen de vis.

L'invention a également pour objet un procédé de lestage d'une roue d'engin agricole au moyen d'un dispositif conforme à un mode de réalisation de l'invention, caractérisé en ce qu'il comprend au moins :
- une étape de fixation d'un socle sur la roue de l'engin agricole,
- une étape de préhension de la première masse par ses encoches
- une étape d'emboîtement de la première masse sur le cône du socle.

Des caractéristiques optionnelles de l'invention, complémentaires ou de substitution sont énoncées ci-après.

Selon certaines caractéristiques, le procédé peut comprendre en outre une étape de fixation de la première masse sur le socle avec des moyens de fixation rapide.

Selon d'autres caractéristiques, l'étape d'emboîtement de la première masse de lestage dans le socle s'effectue suivant une position dans laquelle chacun des supports de la première masse est en appui sur le cône du socle, tandis que chacune des découpes du cône est en regard du logement de chaque support de la première masse. On peut alors procéder ensuite à une étape d'insertion d'une broche dans au moins une des découpes en regard de son logement correspondant.

Selon d'autres caractéristiques, le procédé peut admettre d'autres étapes telles qu'une étape d'emboîtement d'une seconde masse de lestage, selon une position dans laquelle la portion protubérante de la première masse est en appui sur chacun des supports de la seconde masse, tandis que chacune des découpes de la portion protubérante de la première masse est en regard du logement du support correspondant de la seconde masse. Il peut dès lors s'ensuivre une étape d'insertion d'une broche dans au moins l'une des découpes en regard de son logement correspondant, ainsi qu'une étape de fixation de l'ensemble comprenant le socle, la première masse et la seconde masse avec les moyens de fixation rapide.

A titre de variante, ce procédé peut admettre de manière non limitative le montage d'une troisième masse, voire d'un nombre supérieur de masses.

De manière alternative, l'invention a également pour objet un autre procédé de lestage d'une roue d'engin agricole au moyen d'un dispositif conforme à un mode de réalisation de l'invention, caractérisé en ce qu'il comprend au moins :
- une étape au cours de laquelle on emboîte une première masse avec une deuxième masse de lestage, selon une position dans laquelle la portion protubérante de la première masse est en appui sur chacun des supports de la seconde masse, tandis que chacune des découpes de la portion protubérante de la première masse est en regard du logement du support correspondant de la seconde masse,
- une étape d'insertion d'une broche dans au moins une des découpes et le logement correspondant,

- une étape au cours de laquelle on fixe un socle sur la roue de l'engin agricole,
- une étape au cours de laquelle on emboîte l'ensemble des masses de lestage dans le socle selon une position dans laquelle chacun des supports de la première masse est en appui sur le cône du socle, tandis que chacune des découpes du cône du socle est en regard du logement du support correspondant de la première masse,
- une étape au cours de laquelle on insère une broche dans au moins une des découpes du socle et le logement correspondant,
- une étape de fixation de l'ensemble comprenant le socle, la première masse et la seconde masse, avec les moyens les moyens de fixation rapide.

A titre de variante, ce procédé peut admettre de manière non limitative le montage d'une troisième masse, voire d'un nombre supérieur de masses.

D'autres avantages et particularités de l'invention apparaîtront à la lecture de la description détaillée de mises en oeuvre et de modes de réalisation nullement limitatifs, et des dessins annexés suivants :
La FIGURE 1 est une représentation d'une vue de face d'un socle du dispositif de lestage, monté sur une roue d'engin agricole,
La FIGURE 2 est une représentation d'une vue en coupe d'un ensemble de masses de lestage en position assemblée,
Les FIGURES 3 et 4 sont des représentations en perspective, de vues respectivement avant et arrière d'une masse de lestage selon un mode de réalisation,
Les FIGURES 5 et 6 sont des représentations en perspective, de vues respectivement avant et arrière d'un ensemble de deux masses de lestage selon un autre mode de réalisation,
La FIGURE 7 est une représentation d'une vue de profil d'un ensemble de masses de lestage en position assemblée,
La FIGURE 8 est une représentation d'un ensemble de masses de lestage stockées sur un rack.

A des fins de clarté et de concision, les références sur les figures correspondent aux mêmes éléments.

Les modes de réalisation décrits ci-avant étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

Selon un premier aspect de l'invention, le dispositif de lestage comprend au moins une première masse 3 de lestage de roue d'engin agricole, comportant une plaque évidée ayant préférentiellement la forme d'un disque 4, le disque 4 étant doté de deux encoches 41 pratiquées préférentiellement dans toute son épaisseur et diamétralement opposées, lesdites encoches débouchant préférentiellement en la circonférence du disque afin de faciliter la préhension de la masse avec, par exemple, une fourche. Bien entendu, les encoches 41 pourraient ne pas correspondre à un évidement complet du disque, que ce soit dans son épaisseur ou bien en sa périphérie.

Le dispositif comprend aussi un socle 2 destiné à être monté sur une roue d'engin agricole et doté d'un cône de centrage 24 apte à être emboîté dans l'évidement 42 du disque de la première masse. Le dispositif peut comporter avantageusement des moyens de fixation rapide pour solidariser la première masse de lestage montée sur ledit socle, avec ledit socle, lesdits moyens de fixation rapides comportant par exemple une clef 27' apte à être bloquée dans un élément de retenue 27 ménagé sur le socle de manière à maintenir la première masse de lestage contre ledit socle.

De cette façon, le montage de la masse sur la roue est particulièrement simple et rapide puisqu'il suffit de saisir la masse avec, par exemple, une fourche qui s'insère dans les encoches 41, puis d'emboîter la masse sur le cône du socle et enfin de fixer l'ensemble. Le démontage s'effectue de manière tout aussi simple et rapide en effectuant les étapes précédemment mentionnées dans l'ordre inverse.

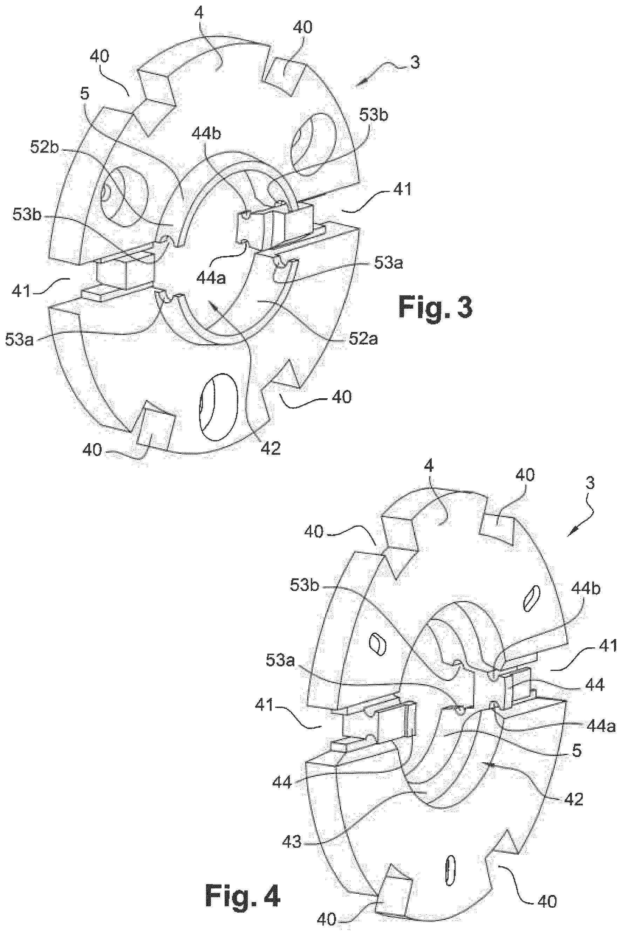

Concernant la masse de lestage représentée en figures 3 et 4, ladite masse 3 comporte une plaque évidée ayant préférentiellement la forme d'un disque 4. Toutefois, si la circularité du disque permet de faciliter le roulage lorsque la masse de lestage est montée sur la roue, l'invention entend protéger également d'autres géométries possibles telles que les polygones réguliers. De même, l'évidement 42 est également de forme préférentiellement circulaire, mais pourrait aussi admettre une forme polygonale.

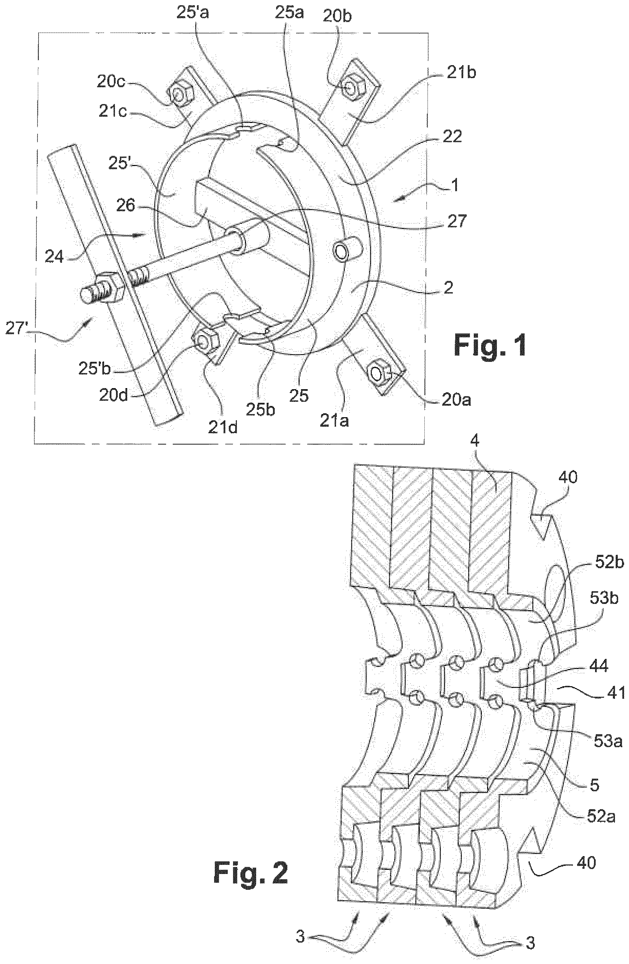

Concernant le socle et tel que représenté en figure 1, il comprend un disque 22 à partir duquel s'étendent quatre pattes 21a, 21b, 21c, 21d fixées sur la roue au moyen de quatre vis 20a, 20b, 20c, 20d. Le disque 22 est prolongé par un cône de centrage composée de deux arcs de cercle 25 et 25' dotés chacun de deux découpes, 25a et 25'a. Le disque 22 est traversé en son diamètre par une barre de support 26 sur laquelle est ménagé un élément de retenue 27 sur lequel peut être insérée une clef 27'. Dans la configuration représentée en figure 1, l'élément de retenue 27 est positionné au centre du disque 22, de sorte que l'élément de retenue 27 est positionné à l'intérieur du cône.

Les moyens de fixation rapide peuvent consister par exemple en un élément de retenue 27 ayant la forme d'une cavité et en une clef 27' dotée d'une tige pourvue à l'une de ses extrémités d'un crochet apte à être bloquer dans ledit élément de retenue 27, et pourvue à son autre extrémité d'une plaque pour maintenir les masses. Afin de maintenir la plaque de maintien, on peut utiliser un écrou ou bien tout autre système pouvant se monter et se bloquer sur la tige rapidement. De façon à sécuriser le blocage des plaques de maintien, lesdites plaques peuvent avantageusement être dotée de tétons aptes à être insérés dans des logements complémentaires prévus sur la face des disques des masses.

Bien entendu, il est possible de prévoir deux éléments de retenue 27 alignés sur la barre de support 26 et positionnés chacun à l'intérieur du cône. A chaque élément de retenue 27 est associée une clef du type de celle décrite précédemment.

Selon un perfectionnement de l'invention, le disque 4 de la première masse est doté de deux supports 44 diamétralement opposés, faisant saillie perpendiculairement au plan du disque et comprenant chacun au moins un premier logement 44a s'étendant suivant une direction appartenant au plan du disque, tandis que le cône de centrage du socle est constitué de deux arcs de cercle 25, 25' non jointifs et dotés en chacune de leurs extrémités d'une découpe 25a, 25b, 25'a, 25'b pratiquée dans l'épaisseur. Ainsi, lorsque le socle et la masse sont emboîtés, les deux arcs de cercle du cône de centrage du socle sont en appui sur chacun des supports de la première masse, tandis que chacun des logements des supports de la première masse 44a, 44b est en regard d'une des découpes du cône 25a, 25b, 25'a, 25'b. Le logement et la découpe correspondante sont dès lors aptes à accueillir une broche permettant de solidariser l'emboîtement du socle et de la masse. Dans cette configuration, les arcs de cercle et les découpes sont identiques aux arcs de cercle et aux découpes des masses de lestage.

Ainsi, il est possible de solidariser la masse de lestage sur le socle de manière provisoire, avant de fixer l'ensemble de manière plus définitive avec les moyens de fixation rapides 27, 27'. Ces moyens de solidarisation provisoire permettent alors de libérer l'outil qui aura permis de saisir et de positionner la masse sur le socle.

L'invention propose d'aller encore plus loin dans les perfectionnements en prolongeant la première masse par au moins une portion protubérante 5 s'étendant depuis l'une des faces du disque suivant une direction sensiblement normale au plan du disque et en bordure de l'évidement 42, ladite portion étant constituée de deux arcs de cercle non jointifs et dotés en chacune de leurs extrémités, d'une découpe 53a, 53b, 53b pratiquée dans l'épaisseur.

De cette façon, il est possible de monter une seconde masse sur la première. Cette seconde masse est alors de forme sensiblement identique à la première, la portion protubérante 5 de la première masse étant apte à être emboîtée dans l'évidement de la seconde masse, selon une position dans laquelle la portion protubérante de la première masse est en appui sur chacun des supports de la seconde masse, tandis que chacune des découpes de la portion protubérante de la première masse est en regard d'un logement des supports de la seconde masse, la découpe et le logement correspondant étant dès lors aptes à accueillir une broche permettant de solidariser l'emboîtement des masses l'une dans l'autre.

Bien entendu, dans la mesure où la seconde masse comporte également une portion protubérante, il est dès lors possible d'emboîter une troisième masse sur la seconde, et ainsi de suite.

En d'autres termes, un autre aspect de l'invention concerne un ensemble d'au moins deux masses comprenant une première et une seconde masses de lestage de roue d'engin agricole, identiques et comportant chacune une plaque évidée ayant préférentiellement la forme d'un disque 4, ledit disque étant doté d'au moins deux supports 44 faisant saillie perpendiculairement au plan du disque, et comprenant chacun au moins un premier logement 44a s'étendant suivant une direction appartenant au plan du disque, ledit disque étant également prolongé par au moins une portion protubérante 5 s'étendant depuis l'une des faces du disque suivant une direction sensiblement normale au plan du disque et en bordure de l'évidement 42, ladite portion étant dotée en chacune de ses extrémités, et en bordure de l'évidement, d'une découpe 53a, 53b pratiquée dans l'épaisseur de la portion protubérante.

De plus, la portion protubérante de la première masse est apte à être emboîtée dans l'évidement de la seconde masse, selon une position dans laquelle la portion protubérante de la première masse est en appui sur chacun des supports de la seconde masse, tandis que chacune des découpes de la portion protubérante de la première masse est en regard du logement du support correspondant, la découpe et le logement correspondant étant dès lors aptes à accueillir une broche permettant de solidariser l'emboîtement des masses l'une dans l'autre.

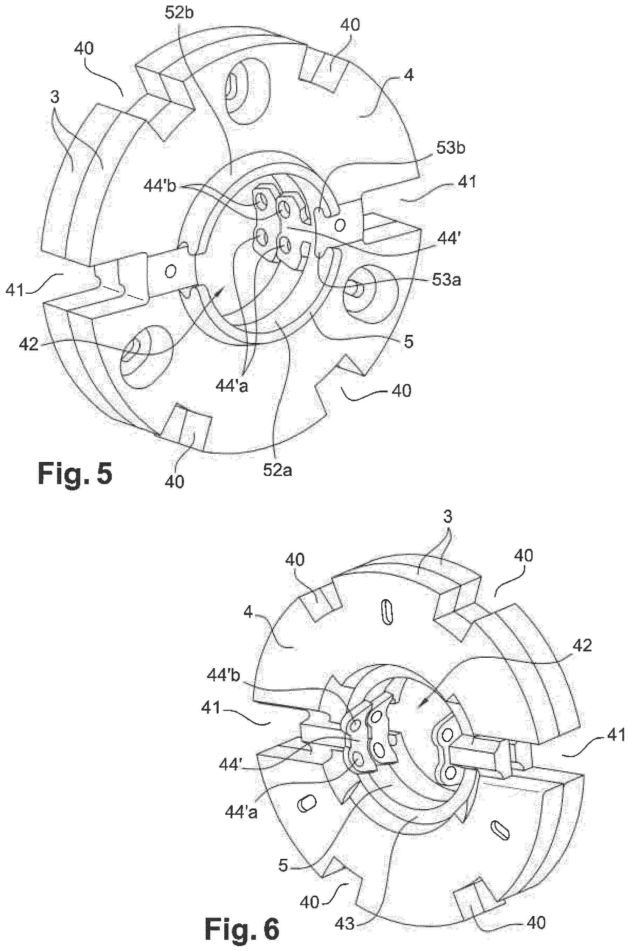

Le principe d'un ensemble de deux masses est représenté en figures 5 et 6, sur lesquelles on voit que les supports 44' sont également disposés de manière diamétralement opposés et forment une avancée perpendiculairement au plan du disque et à l'intérieur de l'évidement. Les premier et second logements 44a' et 44b' sont constitués d'une cavité cylindrique préférentiellement lisse, en ce sens qu'il n'est pas nécessaire qu'elle soit filetée. Les disques sont par ailleurs prolongés par deux portions protubérantes 52a, 52b diamétralement opposée, qui s'étendent chacune depuis l'une des faces du disque et en bordure de l'évidement 42 suivant une direction sensiblement normale au plan du disque.

Bien entendu, en variante, les supports des masses pourraient ne comporter qu'un seul logement. De ce fait, la solidarisation en translation serait assurée par deux broches, soit une pour chaque support (et donc une par paire de logement). Cette configuration est optimale car plus simple en termes de manutention, puisqu'on insère que deux broches au lieu de quatre.

Toujours en variante, les supports des masses pourraient comporter deux logements de tailles différentes, ainsi, il est possible d'insérer une broche de diamètre ou de longueur différents. Ceci permet une plus grande souplesse de fabrication et d'utilisation.

Avantageusement et de manière à faciliter l'emboîtement des masses l'une dans l'autre, l'évidement 42 des masses est de forme sensiblement circulaire.

Tout aussi avantageusement, l'évidemment de la seconde masse est de profondeur suffisante pour permettre l'appui de la portion proéminente de la première masse.

Bien entendu, l'invention entend protéger aussi des portions protubérantes s'étendant suivant une direction légèrement oblique, c'est-à-dire s'écartant de la normale au plan des disques et définissant ainsi une certaine conicité. De cette façon, l'emboîtement des masses se trouve davantage guidé.

Ces portions protubérantes ont la forme d'un arc de cercle dans la mesure où elles suivent le profil de l'évidement circulaire des masses. Chacun de ces arcs de cercle comporte en chacune de ses extrémités une découpe 53a, 53b pratiquée dans son épaisseur.

Conformément à l'invention, la portion protubérante de la masse est apte à être emboîtée dans l'évidement d'une autre masse identique, et ce, dans une position dans laquelle la portion protubérante de la masse est en appui sur chacun des supports de l'autre masse identique, tandis que chacune des découpes de la portion protubérante de la masse est en regard du logement du support correspondant. De ce fait, la découpe et le logement correspondant sont aptes à accueillir un même élément du type broche, goupille, goujon, etc... permettant solidariser les deux masses emboîtées. En d'autres termes, une fois la broche insérée dans la découpe et le logement en regard l'un de l'autre, il n'est plus possible de « désemboîter », de retirer l'une des masses de l'autre.

Il est intéressant de noter que la simple insertion d'un élément du type broche, goupille, goujon, permet de s'affranchir des opérations de vissage que nécessiterait une vis dans un écrou.

Selon le mode de réalisation représenté en figures 2, 3 et 4, et selon lesquels les premier et second logements 44a et 44b sont constitués d'une rainure hémicylindrique s'enfonçant dans l'épaisseur du disque, lesdits logements forment avec leurs découpes correspondantes positionnées en regard, une cavité cylindrique lisse, lorsque la portion protubérante de la masse est en appui sur chacun des supports de l'autre masse identique.

Selon le mode de réalisation représenté en figures 5 et 6, et selon lesquels les premier et second logements 44a' et 44b' sont formés d'une cavité cylindrique préférentiellement lisse, lesdits logements sont alignés avec leurs découpes correspondantes, lorsque la portion protubérante de la masse est en appui sur chacun des supports de l'autre masse identique. L'insertion d'un élément du type broche, goupille, goujon, est alors possible.

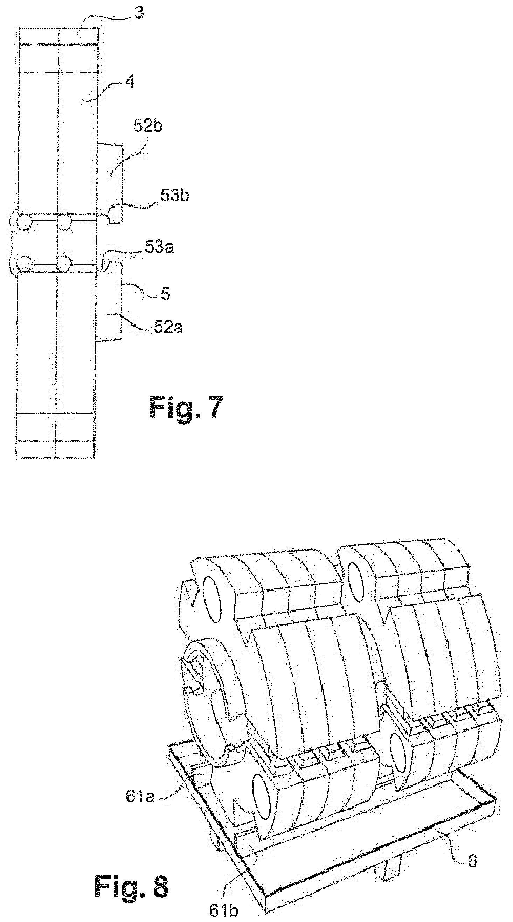

Tel que représenté en figure 7 et de manière à garantir une emprise suffisante de la découpe sur l'élément du type broche, goupille, goujon, chaque découpe forme avantageusement un arc de cercle s'étendant sur suivant une amplitude de 160° à 200°.

De manière à permettre un emboîtement également suffisant des masses entre elles, la portion protubérante 5 s'étend suivant une largeur, c'est-à-dire suivant une direction sensiblement normale au plan du disque, comprise entre 20 et 60 mm.

Avantageusement et tel que représenté en figure 8, le dispositif de lestage de roue d'engin agricole peut comprendre en outre un rack 6 de stockage doté d'au moins un rail apte à accueillir verticalement une rangée de masses de lestages.

De manière à optimiser la stabilité des masses, il est préférable de prévoir deux rails 61a, 61b.

Afin de pouvoir être immobilisées sur le rail, les masses sont avantageusement dotées d'au moins un cran 40 pratiqué dans leur disque sur toute l'épaisseur et compatible avec ledit rail.

Avantageusement, les masses sont dotées de plusieurs crans 40 répartis symétriquement autour de la masse pour conserver un centrage de la localisation du centre de gravité, nécessaire pour assurer une rotation équilibrée.

Sur le plan de la fabrication, les masses de lestage selon l'invention sont tout à fait adaptées pour être des pièces de fonderie. Elles ne nécessitent pas de cotes précises puisqu'elles sont simplement destinées à être emboîtées l'une dans l'autre. De même, l'insertion d'élément de type broche, goujon, ... dans les logements ne nécessite pas d'ajustement particulier. Les masses en fonte selon l'invention sont de quelques centaines de kilos, par exemple 200 kg. Leur assemblage peut permettre des lestages supérieurs à une tonne par roues.

Il va maintenant être exposé les différentes possibilités de mise en oeuvre du dispositif.

Ainsi, la mise en oeuvre du dispositif de lestage peut s'effectuer de diverses façons.

Un premier aspect de l'invention est d'assembler et de désassembler très simplement et très rapidement une masse de lestage sur une roue d'engin agricole.

C'est l'objet du procédé de lestage d'une roue d'engin agricole comportant les étapes suivantes :
- une étape de fixation d'un socle 2 sur la roue de l'engin agricole,
- une étape de préhension de la première masse 3 par ses encoches 41,
- une étape d'emboîtement de la première masse sur le cône 24 du socle.

Bien entendu, le lestage peut s'achever avec une étape de fixation plus définitive de la première masse sur le socle avec les moyens de fixation rapide 27, 27'.

On remarquera alors qu'il n'est pas nécessaire de solidariser provisoirement le socle avec la masse au moyen d'une broche, puisque c'est une fourche (ou tout autre outil équivalent) qui maintien la masse contre le socle le temps de mettre en oeuvre les moyens de fixation rapide 27, 27'.

Si toutefois en variante il est nécessaire de solidariser provisoirement le socle avec la masse, l'étape d'emboîtement de la première masse de lestage dans le socle peut s'effectuer, suivant une position dans laquelle le cône est en appui sur chacun des supports de la première masse, tandis que chacune des découpes du cône est en regard du logement du support correspondant de la première masse. Bien entendu, le socle doit être doté d'un cône pourvu de découpes et la masse doit être dotée de supports.

Ensuite, on peut procéder à une étape d'insertion d'une broche dans au moins une des découpes en regard de son logement correspondant.

Si un lestage modulaire est requis, on peut procéder ensuite à une étape d'emboîtement d'une seconde masse de lestage, selon une position dans laquelle la portion protubérante de la première masse est en appui sur chacun des supports de la seconde masse, tandis que chacune des découpes de la portion protubérante de la première masse est en regard du logement du support correspondant de la seconde masse. Ceci implique que les masses soient dotées chacune d'une portion protubérante. Après l'étape d'emboîtement, s'ensuit une étape d'insertion d'une broche dans au moins une des découpes en regard de son logement correspondant, puis une étape de fixation de l'ensemble comprenant le socle, la première masse et la seconde masse avec les moyens de fixation rapide 27, 27'.

Bien entendu, dans la mesure où la seconde masse comporte également une portion protubérante, il est dès lors possible d'emboîter une troisième masse sur la seconde, et ainsi de suite.

Une fois les masses et le socle fixés ensembles, il est préférable d'enlever les broches qui sécurisaient les découpes avec leur logement respectif. En effet, elles pourraient tomber au sol d'elles-mêmes lors du roulage de l'engin.

La préhension des masses peut s'effectuer à chaque fois au moyen de bras ou de fourches articulés et montés sur un tracteur.

Le délestage s'opère suivant des opérations inverses dans lesquelles, on insère des broches pour sécuriser les découpes et les logements.

Puis, on enlève les moyens de fixation 27, 27', puis on enlève les broches et les masses une à une.

Les procédés de lestage précédemment décrits présentent l'intérêt de lester la roue au fur et à mesure selon la charge désirée, et de faire varier la charge en fonction du travail de l'engin agricole. En d'autres termes, on ajoute ou bien on enlève des masses selon les besoins, et notamment en fonction des caractéristiques du terrain (pente, caractère meuble, ...).

En alternative, l'invention a également pour objet un procédé de lestage dans lequel la solidarisation des masses entre elles a lieu en amont du montage sur le socle. Ainsi ce procédé de lestage comprend au moins :
- une étape au cours de laquelle on emboîte une première masse avec une deuxième masse de lestage, selon une position dans laquelle la portion protubérante de la première masse est en appui sur chacun des supports de la seconde masse, tandis que chacune des découpes de la portion protubérante de la première masse est en regard du logement du support correspondant de la seconde masse,
- une étape d'insertion d'une broche dans au moins une des découpes en regard de son logement correspondant,
- une étape au cours de laquelle on fixe un socle 2 sur la roue de l'engin agricole,
- une étape au cours de laquelle on emboîte l'ensemble des masses de lestage dans le socle selon une position dans laquelle chacun des supports de la première masse est en appui sur le cône du socle, tandis que chacune des découpes du cône du socle est en regard du logement du support correspondant de la première masse,
- une étape au cours de laquelle on insère une broche dans au moins une des découpes du socle et le logement correspondant,
- une étape de fixation de l'ensemble comprenant le socle, la première masse et la seconde masse, avec les moyens les moyens de fixation rapide.

Bien entendu, dans la mesure où la seconde masse comporte également une portion protubérante, il est dès lors possible d'emboîter une troisième masse sur la seconde, et ainsi de suite.

Le délestage s'opère suivant des opérations inverses dans lesquelles, on insère des broches pour sécuriser les découpes et les logements.

Puis, on enlève les moyens de fixation 27, 27', puis on enlève uniquement les broches reliant la première masse au socle.

Enfin, on retire l'ensemble des masses en une seule étape. Lors du démontage, les broches ne sont pas retirées de l'ensemble de masses.

En démontant l'ensemble des masses, il devient alors possible de les stocker ensembles pour faciliter une reprise ultérieure.

La manipulation des ensembles de masses peut se faire avec un chariot élévateur, et donc, sans outils spécifique.

Ce deuxième mode permet de monter en une seule étape un ensemble de masses sur la roue. En effet, l'assemblage des masses est effectué au sol, et avantageusement sur un rack de stockage. Une fois la charge assemblée, il suffit de monter l'ensemble sur le socle préalablement fixé sur la roue.

En résumé, l'intérêt de l'invention réside dans le fait qu'il est possible d'assembler et désassembler très simplement et très rapidement pour chaque roue une ou plusieurs masses de lestage.

Ensuite, une fois le niveau de lestage choisit, il est possible de l'installer ou de l'enlever en une seule fois sans avoir à procéder masse par masse.

Un des intérêts majeurs de l'invention est que le socle peut être customisé à la roue de l'engin agricole tandis que les masses sont génériques, donc moins couteuses et plus facile à gérer.

De plus, même s'il n'y a qu'une seule masse par roue, l'ajout d'un socle permet d'avoir une flasque de roue simple qui ne coûte que quand elle est mise en oeuvre, plutôt que d'avoir un centrage et des éléments de fixation à incorporer sur chaque engin, même s'il n'est pas appelé à recevoir du lestage amovible.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Dispositif de lestage comprenant au moins :
- une première masse (3) de lestage de roue d'engin agricole, comportant une plaque évidée ayant la forme d'un disque (4), le disque (4) étant doté de deux encoches (41) diamétralement opposées,
- un socle (2) apte à être monté sur une roue d'engin agricole et doté d'un cône de centrage (24) apte à être emboîté dans l'évidement (42) du disque de la première masse,
**caractérisé en ce que** le disque (4) de la première masse est doté de deux supports (44) diamétralement opposés, faisant saillie perpendiculairement au plan du disque et comprenant chacun au moins un premier logement (44a) s'étendant suivant une direction appartenant au plan du disque, tandis que le cône de centrage comprend deux arcs de cercle (25, 25') non jointifs et dotés en chacune de leurs extrémités d'une découpe (25a, 25b, 25'a, 25'b) pratiquée dans l'épaisseur, de sorte que, lorsque le cône et la masse sont emboîtés, les deux arcs de cercle du cône sont en appui sur chacun des supports de la masse, tandis que chacun des logements des supports de la masse est en regard d'une des découpes des arcs de cercle, le logement et la découpe correspondante étant dès lors aptes à accueillir une broche permettant de solidariser l'emboîtement du socle et de la masse.

2. Dispositif de lestage selon la revendication 1, **caractérisé en ce que** les de deux encoches (41) sont pratiquées dans toute l'épaisseur du disque.

3. Dispositif de lestage selon la revendication 1 ou 2, **caractérisé en ce que** les encoches débouchent préférentiellement en la circonférence du disque.

4. Dispositif de lestage selon l'une quelconque des revendications précédentes, **caractérisé en ce qu'**il comprend en outre des moyens de fixation rapide pour solidariser la première masse de lestage montée sur ledit socle avec ledit socle, lesdits moyens de fixation rapides comportant une clef (27') apte à être bloquée dans un élément de retenue (27) ménagé sur le socle, de manière à maintenir la première masse de lestage contre ledit socle.

5. Dispositif de lestage selon l'une quelconque des revendications précédentes, **caractérisé en ce que** le disque de la première masse est prolongé par au moins une portion protubérante (5) s'étendant depuis l'une des faces du disque de la masse suivant une direction sensiblement normale au plan du disque et en bordure de l'évidement (42), ladite portion étant constituée de deux arcs de cercle non jointifs et dotés en chacune de leurs extrémités, d'une découpe (53a, 53b) pratiquée dans l'épaisseur.

6. Dispositif de lestage selon la revendication 5, **caractérisé en ce qu'**il comprend une seconde masse de forme sensiblement identique à la première, la portion protubérante de la première masse (52a, 52b) étant apte à être emboîtée dans l'évidement de la seconde masse, selon une position dans laquelle la portion protubérante de la première masse est en appui sur chacun des supports (44') de la seconde masse, tandis que chacune des découpes de la portion protubérante de la première masse est en regard d'un logement (44'a, 44'b) des supports de la seconde masse, la découpe et le logement correspondant étant dès lors aptes à accueillir une broche permettant de solidariser l'emboîtement des masses l'une dans l'autre.

7. Dispositif de lestage de roue d'engin agricole, selon l'une quelconque des revendications précédentes, **caractérisé en ce que** l'évidement des masses est de forme sensiblement circulaire.

8. Dispositif de lestage de roue d'engin agricole, selon l'une quelconque des revendications 5 à 7, **caractérisé en ce que** les découpes (53a, 53b) pratiquées dans l'épaisseur des extrémités de la portion protubérante des masses forment chacune un arc de cercle s'étendant suivant une amplitude de 160° à 200°.

9. Dispositif de lestage de roue d'engin agricole, selon l'une quelconque des revendications 6 à 8, **caractérisé en ce que** le logement de chaque support des masses et sa découpe positionnée en regard, forment à eux deux, lorsque la portion protubérante de la première masse est en appui sur chacun des supports de la seconde masse, une cavité cylindrique, préférentiellement lisse.

10. Dispositif de lestage de roue d'engin agricole, selon l'une quelconque des revendications 6 à 9, **caractérisé en ce que** le logement de chaque support des masses est constitué d'une cavité cylindrique, préférentiellement lisse, pratiquée dans ledit support.

11. Dispositif de lestage de roue d'engin agricole, selon l'une quelconque des revendications précédentes, **caractérisé en ce que** les moyens de fixation rapide consistent en un élément de retenue (27) et une clef (27') dotée d'une tige pourvue à l'une de ses extrémités d'un crochet apte à être bloquer dans ledit élément de retenue, et pourvue à son autre extrémité d'une plaque pour maintenir les masses et d'un écrou pour fixer la plaque de maintien.

12. Dispositif de lestage de roue d'engin agricole, selon l'une quelconque des revendications précédentes, **caractérisé en ce que** le dispositif comprend en outre un rack (6) de stockage doté d'au moins un rail apte à accueillir une rangée de masses de lestages.

13. Dispositif de lestage de roue d'engin agricole, selon l'une quelconque des revendications précédentes, **caractérisé en ce que** lesdites masses comportent au moins un cran (40) pratiqué dans leur disque sur toute l'épaisseur.

14. Dispositif de lestage de roue d'engin agricole, selon l'une quelconque des revendications précédentes, **caractérisé en ce que** le socle comporte des pattes 21a, 21b, 21c, 21d aptes à être fixées sur la roue d'un engin agricole au moyen respectivement de vis 20a, 20b, 20c, 20d.

15. Procédé de lestage d'une roue d'engin agricole au moyen d'un dispositif conforme à l'une quelconque des revendications 1 à 14, **caractérisé en ce qu'**il comprend au moins :
- une étape de fixation d'un socle (2) sur la roue d'un engin agricole,
- une étape de préhension d'une première masse (3) par ses encoches (41)
- une étape d'emboîtement de la première masse sur le cône (24) du socle.

16. Procédé de lestage d'une roue d'engin agricole selon la revendication 15, **caractérisé en ce qu'**il comprend en outre une étape de fixation de la première masse sur le socle avec des moyens de fixation rapide (27, 27').

17. Procédé de lestage d'une roue d'engin agricole selon la revendication 15, et dans lequel le dispositif est conforme à l'une quelconque des revendications 4 à 14 **caractérisé en ce que** :
- on procède à l'étape d'emboîtement de la première masse de lestage dans le socle, suivant une position dans laquelle le cône est en appui sur chacun des supports de la première masse, tandis que chacune des découpes du cône est en regard du logement du support correspondant de la première masse,
- on procède ensuite à une étape d'insertion d'une broche dans au moins une des découpes et le logement correspondant.

18. Procédé de lestage d'une roue d'engin agricole selon la revendication 17, **caractérisé en ce que** :
- on procède ensuite à une étape d'emboîtement d'une seconde masse de lestage, selon une position dans laquelle la portion protubérante de la première masse est en appui sur chacun des supports de la seconde masse, tandis que chacune des découpes de la portion protubérante de la première masse est en regard du logement du support correspondant de la seconde masse,
- on procède ensuite à une étape d'insertion d'une broche dans au moins une des découpes et le logement correspondant, de manière à solidariser provisoirement la première masse avec la seconde masse,
- une étape de fixation de l'ensemble comprenant le socle, la première masse et la seconde masse avec les moyens de fixation rapide (27, 27').

19. Procédé de lestage d'une roue d'engin agricole au moyen d'un dispositif conforme à l'une quelconque des revendications 6 à 14, **caractérisé en ce qu'**il comprend au moins :
- une étape au cours de laquelle on emboîte une première masse avec une deuxième masse de lestage, selon une position dans laquelle la portion protubérante de la première masse est en appui sur chacun des supports de la seconde masse, tandis que chacune des découpes de la portion protubérante de la première masse est en regard du logement du support correspondant de la seconde masse,
- une étape d'insertion d'une broche dans au moins une des découpes en regard de son logement correspondant,
- une étape au cours de laquelle on fixe un socle 2 sur la roue d'un engin agricole,
- une étape au cours de laquelle on emboîte l'ensemble des masses de lestage dans le socle selon une position dans laquelle chacun des supports de la première masse est en appui sur le cône du socle, tandis que chacune des découpes du cône du socle est en regard du logement du support correspondant de la première masse,
- une étape au cours de laquelle on insère une broche dans au moins une des découpes du socle en regard de son logement correspondant,
- une étape de fixation de l'ensemble comprenant le socle, la première masse et la seconde masse, avec les moyens les moyens de fixation rapide.

## Patentansprüche

1. Ballastvorrichtung, welche mindestens aufweist:
- eine erste Ballastmasse (3) für ein Rad einer landwirtschaftlichen Maschine, mit einer ausgenommenen Platte in Form einer Scheibe (4), wobei die Scheibe (4) mit zwei diametral gegenüberliegenden Ausschnitten (41) versehen ist,
- einem Sockel (2), der an ein Rad einer landwirtschaftlichen Maschine anbringbar ist und mit einem Zentrierkonus (24) versehen ist, der in die Ausnehmung (42) der Scheibe der ersten Masse einsetzbar ist,
**dadurch gekennzeichnet, dass** die Scheibe (4) der ersten Masse mit zwei diametral gegenüberliegenden Stützen (44) versehen ist, welche senkrecht zur Ebene der Scheibe vorstehen und jeweils mindestens eine erste Aufnahme (44a) aufweisen, die sich in eine zur Ebene der Platte gehörende Richtung erstreckt, während der Zentrierkonus zwei Kreisbögen (25, 25') aufweist, die nicht miteinander verbunden sind und an jedem ihrer Enden mit einer in der Dicke ausgebildeten Einkerbung (25a, 25b, 25a', 25b') versehen sind, derart, dass, wenn der Konus und die Masse zusammengesteckt sind, die beiden Kreisbögen des Konus an jeder der Stützen der Masse abgestützt sind, während jede der Aufnahmen der Stützen der Masse einer der Einkerbungen der Kreisbögen gegenüberliegt, wobei die Aufnahme und die entsprechende Einkerbung somit in der Lage sind, einen Stift aufzunehmen, der es ermöglicht, die Steckverbindung des Sockels und der Masse fest zu verbinden.

2. Ballastvorrichtung nach Anspruch 1, **dadurch gekennzeichnet, dass** die beiden Ausschnitte (41) durch die gesamte Dicke der Scheibe ausgebildet sind.

3. Ballastvorrichtung nach Anspruch 1 oder 2, **dadurch gekennzeichnet, dass** die Ausschnitte vorzugsweise zum Umfang der Scheibe offen sind.

4. Ballastvorrichtung nach einem der vorhergehenden Ansprüche, **dadurch gekennzeichnet, dass** sie ferner Schnellbefestigungsvorrichtungen zum festen Verbinden der an dem Sockel angebrachten ersten Ballastmasse mit dem Sockel aufweist, wobei die Schnellbefestigungsvorrichtungen einen Schlüssel (27') aufweisen, der geeignet ist, in einem an dem Sockel ausgebildeten Halteelement (27) derart verriegelt zu werden, dass es die erste Ballastmasse an dem Sockel hält.

5. Ballastvorrichtung nach einem der vorhergehenden Ansprüche, **dadurch gekennzeichnet, dass** die Scheibe der ersten Masse durch mindestens einen Vorsprungsbereich (5) verlängert ist, der sich von einer der Seiten der Scheibe der Masse in einer zur Ebene der Scheibe im Wesentlichen senkrechten Richtung und am Rand der Ausnehmung (42) erstreckt, wobei der Bereich aus zwei Kreisbögen besteht, die nicht miteinander verbunden sind und an jedem ihrer Enden mit einer in der Dicke ausgebildeten Einkerbung (53a, 53b) versehen sind.

6. Ballastvorrichtung nach Anspruch 5, **dadurch gekennzeichnet, dass** sie eine zweite Masse von zu der ersten Masse im Wesentlichen identischer Form aufweist, wobei der Vorsprungsbereich der ersten Masse (52a, 52b) in die Ausnehmung der zweiten Masse in einer Position einsetzbar ist, in welcher der Vorsprungsbereich der ersten Masse an jeder der Stützen (44') der zweiten Masse abgestützt ist, während jede der Einkerbungen des Vorsprungsbereich der ersten Masse einer Aufnahme (44'a, 44'b) der Stützen der zweiten Massen gegenüberliegt, wobei die Einkerbung und die entsprechende Aufnahme somit in der Lage sind, einen Stift aufzunehmen, der es ermöglicht, die Steckverbindung der Massen untereinander fest zu verbinden.

7. Ballastvorrichtung für ein Rad einer landwirtschaftlichen Maschine nach einem der vorhergehenden Ansprüche, **dadurch gekennzeichnet, dass** die Ausnehmung der Massen im Wesentlichen kreisförmig ist.

8. Ballastvorrichtung für ein Rad einer landwirtschaftlichen Maschine nach einem der Ansprüche 5 bis 7, **dadurch gekennzeichnet, dass** die in der Dicke der Enden des Vorsprungsbereichs der Massen ausgebildeten Einkerbungen (53a, 53b) jeweils einen Kreisbogen bilden, der sich über einen Bereich von 160° bis 200° erstreckt.

9. Ballastvorrichtung für ein Rad einer landwirtschaftlichen Maschine nach einem der Ansprüche 6 bis 8, **dadurch gekennzeichnet, dass** die Aufnahme jeder Stütze der Massen und deren gegenüberliegend angeordnete Einkerbung zusammen einen zylindrischen, vorzugsweise glatten Hohlraum bilden, wenn der Vorsprungsbereich der ersten Masse auf jeder der Stützen der zweiten Masse abgestützt ist.

10. Ballastvorrichtung für ein Rad einer landwirtschaftlichen Maschine nach einem der Ansprüche 6 bis 9, **dadurch gekennzeichnet, dass** die Aufnahme jeder Stütze der Massen durch einen zylindrischen, vorzugsweise glatten Hohlraum gebildet ist, der in der Stütze ausgebildet ist.

11. Ballastvorrichtung für ein Rad einer landwirtschaftlichen Maschine nach einem der vorhergehenden Ansprüche, **dadurch gekennzeichnet, dass** die Schnellbefestigungseinrichtungen aus einem Halteelement (27) und einem Schlüssel (27') bestehen, der eine Stange aufweist, die an einem ihrer Enden mit einem Haken versehen ist, der in dem Halteelement verriegelbar ist, und die an ihrem anderen Ende mit einer Platte zum Halten der Massen und mit einer Mutter zum Befestigen der Halteplatte versehen ist.

12. Ballastvorrichtung für ein Rad einer landwirtschaftlichen Maschine nach einem der vorhergehenden Ansprüche, **dadurch gekennzeichnet, dass** die Vorrichtung ferner ein Lagergestell (6) aufweist, das mit mindestens einer Schiene versehen ist, die zum Aufnehmen einer Reihe von Ballastmassen geeignet ist.

13. Ballastvorrichtung für ein Rad einer landwirtschaftlichen Maschine nach einem der vorhergehenden Ansprüche, **dadurch gekennzeichnet, dass** die Massen mindestens eine in ihrer Scheibe über die gesamte Dicke ausgebildete Aussparung (40) aufweisen.

14. Ballastvorrichtung für ein Rad einer landwirtschaftlichen Maschine nach einem der vorhergehenden Ansprüche, **dadurch gekennzeichnet, dass** der Sockel Laschen (21a, 21b, 21c, 21d) aufweist, die zur Befestigung an dem Rad einer landwirtschaftlichen Maschine mittels jeweiliger Schrauben (20a, 20b, 20c, 20d) geeignet sind.

15. Verfahren zur Beschwerung eines Rades einer landwirtschaftlichen Maschine gemäß einem der Ansprüche 1 bis 14, **dadurch gekennzeichnet, dass** es mindestens aufweist:
- einen Schritt des Befestigens eines Sockels (2) an dem Rad einer landwirtschaftlichen Maschine,
- einen Schritt des Greifens einer ersten Masse (3) an deren Ausschnitten (41),
- einen Schritt des Aufsetzens der ersten Masse auf den Konus (24) des Sockels.

16. Verfahren zur Beschwerung eines Rades einer landwirtschaftlichen Maschine nach Anspruch 15, **dadurch gekennzeichnet, dass** es ferner einen Schritt des Befestigens der ersten Masse an dem Sockel mittels Schnellbefestigungseinrichtungen (27, 27') aufweist.

17. Verfahren zur Beschwerung eines Rades einer landwirtschaftlichen Maschine nach Anspruch 15, und bei welchem die Vorrichtung einem der Ansprüche 4 bis 14 entspricht, **dadurch gekennzeichnet, dass**:
- der Schritt des Aufsetzens der ersten Ballastmasse in den Sockel entsprechend einer Position durchgeführt wird, in welcher der Konus an jeder der Stützen der ersten Masse abgestützt ist, während jeder der Einkerbungen des Konus der entsprechenden Aufnahme der Stütze der ersten Masse gegenüberliegt,
- anschließend ein Schritt des Einführens eines Stifts in mindestens eine der Einkerbungen und die entsprechende Aufnahme durchgeführt wird.

18. Verfahren zur Beschwerung eines Rades einer landwirtschaftlichen Maschine nach Anspruch 17, **dadurch gekennzeichnet, dass**:
- anschließend ein Schritt des Aufsetzens einer zweiten Ballastmasse entsprechend einer Position durchgeführt wird, in welcher der Vorsprungsbereich der ersten Masse an jeder der Stützen der zweiten Masse abgestützt ist, während jede der Einkerbungen des Vorsprungsbereichs der ersten Masse der entsprechenden Aufnahme der Stütze der zweiten Masse gegenüberliegt,
- anschließend ein Schritt des Einführens eines Stifts in mindestens eine der Einkerbungen und die entsprechende Aufnahme durchgeführt wird, um die erste Masse provisorisch mit der zweiten Masse fest zu verbinden,
- ein Schritt des Befestigens der Einheit aus dem Sockel, der ersten Masse und der zweiten Masse mittels der Schnellbefestigungseinrichtungen (27, 27') durchgeführt wird.

19. Verfahren zur Beschwerung eines Rades einer landwirtschaftlichen Maschine gemäß einem der Ansprüche 6 bis 14, **dadurch gekennzeichnet, dass** es mindestens aufweist:
- einen Schritt, in dessen Verlauf eine erste Masse mit einer zweiten Ballastmasse entsprechend einer Position zusammengesteckt wird, in welcher der Vorsprungsbereich der ersten Masse an jeder der Stützen der zweiten Masse abgestützt ist, während jede der Einkerbungen des Vorsprungsbereichs der ersten Masse der entsprechenden Aufnahme der Stütze der zweiten Masse gegenüberliegt,
- einen Schritt des Einführens eines Stifts in mindestens eine der ihrer entsprechenden Aufnahme gegenüberliegenden Einkerbungen,
- einen Schritt, in dessen Verlauf ein Sockel (2) an dem Rad einer landwirtschaftlichen Maschine befestigt wird,
- einen Schritt, in dessen Verlauf die Einheit der Ballastmassen entsprechend einer Position in den Sockel gesteckt wird, in welcher jede der Stützen der ersten Masse an dem Sockel des Konus abgestützt ist, während jede der Einkerbungen des Konus des Sockels der entsprechenden Aufnahme der Stütze der ersten Masse gegenüberliegt,
- einen Schritt, in dessen Verlauf ein Stift in mindestens eine der ihrer entsprechenden Aufnahme gegenüberliegenden Einkerbungen eingeführt wird,
- einen Schritt des Befestigens der Einheit aus dem Sockel, der ersten Masse und der zweiten Masse mittels der Schnellbefestigungseinrichtungen.

## Claims

1. A ballasting device comprising at least:
- a first mass (3) for ballasting an agricultural machine wheel, including a hollowed-out plate in the form of a disk (4), the disk (4) being provided with two diametrically opposite notches (41),
- a pedestal (2) able to be mounted to an agricultural machine wheel and provided with a centering cone (24) able to be nested in the recess (42) of the disk of the first mass,
**characterised in that** the disk (4) of the first mass is provided with two diametrically opposite supports (44), projecting perpendicular to the plane of the disk and each comprising at least one first housing (44a) extending along a direction belonging to the plane of the disk, whereas the centering cone comprises two non-adjoining arcs of circle (25, 25') and provided in each of theirs ends, with a cut-out (25a, 25b, 25'a, 25'b)is provided in the thickness, such that, when the cone and the mass are nested, both arcs of circle of the cone bear against each of the supports of the mass, whereas each of the housings of the supports of the mass is facing one of the cut-outs of the arcs of circle, the housing and the corresponding cut-out being hence able to accommodate a pin enabling the nesting of the pedestal and the mass to be secured.

2. The ballasting device according to claim 1, **characterised in that** both notches (41) are provided in the entire thickness of the disk.

3. The ballasting device according to claim 1 or 2, **characterised in that** the notches preferentially open into the circumference of the disk.

4. The ballasting device according to any of the preceding claims, **characterised in that** it further comprises quick-realise fastening means for securing the first ballasting mass mounted to said pedestal with said pedestal, said quick-release fastening means comprising a wrench (27') able to be blocked in a retaining element (27) provided on the pedestal, so as to maintain the first ballasting mass against said pedestal.

5. The ballasting device according to any of the preceding claims, **characterised in that** the disk of the first mass is extended by at least one protruding portion (5) extending from one of the faces of the disk of the mass along a direction substantially normal to the plane of the disk and at the border of the recess (42), said portion consisting of two non-adjoining arcs of circle provided at each of their ends, with a cut-out (53a, 53b) provided in the thickness.

6. The ballasting device according to claim 5, **characterised in that** it comprises a second mass with a substantially identical shape to the first one, the protruding portion of the first mass (52a, 52b) being able to be nested in the recess of the second mass, at a position in which the protruding portion of the first mass bears against each of the supports (44') of the second mass, whereas each of the cut-outs of the protruding portion of the first mass is facing a housing (44'a, 44'b) of the supports of the second mass, the cut-out and the corresponding housing being hence able to accommodate a pin enabling the nesting of the masses into each other to be secured.

7. The ballasting device for an agricultural machine wheel according to any of the preceding claims, **characterised in that** the recess of the masses has a substantially circular shape.

8. The ballasting device for an agricultural machine wheel according to any of claims 5 to 7, **characterised in that** the cut-outs (53a, 53b) provided in the thickness of the ends of the protruding portion of the masses each form an arc of circle extending along an amplitude from 160° to 200°.

9. The ballasting device of an agricultural machine wheel according to any of claims 6 to 8, **characterised in that** the housing of each support of the masses and its cut-out positioned facing it, form together, when the protruding portion of the first mass bears against each of the supports of the second mass, preferentially smooth cylindrical cavity.

10. The ballasting device of an agricultural machine wheel according to any of claims 6 to 9, **characterised in that** the housing of each support of the masses consists of a preferentially smooth cylindrical cavity, provided in said support.

11. The ballasting device of an agricultural machine wheel, according to any of the preceding claims, **characterised in that** the quick-release fastening means consist of a retaining element (27) and a wrench (27') provided with a rod provided at one of its ends with a hook able to be blocked in said retaining element, and provided at its other end, with a plate to maintain the masses and a nut to attach the maintaining plate.

12. The ballasting device of an agricultural machine wheel according to any of the preceding claims, **characterised in that** the device further comprises a storage rack (6) provided with at least one rail able to accommodate a row of ballasting masses.

13. The ballasting device of an agricultural machine wheel according to any of the preceding claims, **characterised in that** said masses include at least one catch (40) provided in their disk throughout the thickness.

14. The ballasting device of an agricultural machine wheel according to any of the preceding claims, **characterised in that** the pedestal includes tabs (21a, 21b, 21c, 21d) able to attached to an agricultural machine wheel by means of screws (20a, 20b, 20c, 20d) respectively.

15. A method for ballasting an agricultural machine wheel by means of a device in accordance with any of claims 1 to 14, **characterised in that** it includes at least:
- a step of attaching a pedestal (2) to the agricultural machine wheel,
- a step of gripping a first mass (3) through its notches (41)
- a step of nesting the first mass on the cone (24) of the pedestal.

16. The method for ballasting an agricultural machine wheel according to claim 15, **characterised in that** it further comprises a step of attaching the first mass to the pedestal with quick-release fastening means (27, 27').

17. The method for ballasting an agricultural machine wheel according to claim 15, and wherein the device is in accordance with any of claims 4 to 14 **characterised in that**:
- the step of nesting the first ballasting mass in the pedestal is conducted, at a position in which the cone bears against each of the supports of the first mass, whereas each of the cut-outs of the cone is facing the housing of the corresponding support of the first mass,
- then the step of inserting a pin into at least one of the cut-outs and the corresponding housing is conducted.

18. The method for ballasting an agricultural machine wheel according to claim 17, **characterised in that**:
- a step of nesting a second ballasting mass, at a position in which the protruding portion of the first mass bears against each of the supports of the second mass, whereas each of the cut-outs of the protruding portion of the first mass is facing the housing of the corresponding support of the second mass is then conducted,
- a step of inserting a pin into at least one of the cut-outs and the corresponding housing is then conducted, so as to temporarily secure the first mass with the second mass,
- a step of attaching the whole comprising the pedestal, the first mass and the second mass with the quick-release fastening means (27, 27').

19. A method for ballasting of an agricultural machine wheel by means of a device in accordance with any of claims 6 to 14, **characterised in that** it comprises:
- a step during which a first mass is nested with a second ballasting mass, at a position in which the protruding portion of the first mass bears against each of the supports of the second mass, whereas each of the cut-outs of the protruding portion of the first mass is facing the housing of the corresponding support of the second mass,
- a step of inserting a pin into at least one of the cut-outs facing its corresponding housing,
- a step during which a pedestal (2) is attached to the agricultural machine wheel,
- a step during which all the ballasting masses are nested in the pedestal at a position in which each of the supports of the first mass bears against the cone of the pedestal, whereas each of the cut-outs of the cone of the pedestal is facing the housing of the corresponding support of the first mass,
- a step during which a pin is inserted into at least one of the cut-outs of the pedestal facing its corresponding housing,
- a step of attaching the whole comprising the pedestal, the first mass and the second mass with the quick-release fastening means.
